# EUROPÄISCHE PATENTANMELDUNG

(11) **EP 4 763 307 A1**
(43) Veröffentlichungstag der Anmeldung: **24.06.2026**
(21) Anmeldenummer: 25225500.5
(22) Anmeldetag: 19.12.2025
(51) Int. Cl.: B01D 39/04, C12H 1/02

(54) **VERFAHREN ZUR HERSTELLUNG VON SPHÄRISCHEN PVP BEADS ALS BIERSTABILISIERUNGSMITTEL**

(30) Priorität: 20.12.2024 DE 102024139221
(71) Anmelder: Albert Handtmann Armaturenfabrik GmbH & Co. KG, 88400 Biberach/Riss (DE)
(72) Erfinder: HECKER, Oliver, 75038 Oberderdingen (DE); FEISCHE, Michael, 88471 Laupheim (DE)
(74) Vertreter: Grünecker Patent- und Rechtsanwälte PartG mbB

(57) **Zusammenfassung**

Die vorliegende Erfindung umfasst Verfahren zur Herstellung eines Polyvinylpyrrolidon-Copolymers, welche als poröse, hydrophile Trennmatrix zur Stabilisierung fermentierter Getränks verwendet werden können. Das Polyvinylpyrrolidon-Co-polymer der vorliegenden Erfindung hat einen Anteil an N-Vinylpyrolidon einheiten von mindestens 70 Masse-% und ist geeignet zur verlustfreien Regeneration.

## Beschreibung

### Technisches Gebiet

Die vorliegende Erfindung betrifft Verfahren zur Herstellung eines Polyvinylpyrrolidon-Copolymers. Die Erfindung betrifft ferner eine poröse, hydrophile Trennmatrix umfassend ein Polyvinylpyrrolidon-Copolymer zur Stabilisierung eines Getränks, sowie Verfahren zur Stabilisierung eines Getränks das eine trübungserzeugende Verbindung enthält.

### Hintergrund der Erfindung

Die nicht-mikrobiologische Trübung von Bier oder Wein wird hauptsächlich hervorgerufen durch Polyphenole, welche Komplexe mit Proteinen eingehen und dadurch zur Trübung und Reduktion der kolloidalen Stabilität führen.

Bei der Stabilisierung von Bier werden trübungserzeugende Substanzen aus dem Bier entfernt, um damit die Haltbarkeit des Bieres zu erhöhen, sowie die visuelle Erscheinung an die Anforderungen der Konsumenten anzupassen, welche generell klare Biere bevorzugen. Hierbei werden durch spezielle Verfahren Polyphenole (beispielsweise Tannine, Anthocyanogene, Catechine, Flavonoide), Proteine oder Polyphenol-Protein Komplexe aus der Suspension entfernt.

Die Anforderungen an die in diesen Verfahren verwendete Trennmatrix umfassen unter anderem geringe Materialkosten, Regenerierbarkeit, keinen Einfluss der Trennmatrix auf den Geschmack und die Reinheit des Produkts, sowie die effiziente Komplexbildung der Trennmatrix mit trübungserzeugenden Substanzen.

Polyphenole und Polyphenol-Protein Komplexe können beispielsweise entfernt werden mithilfe einer Trennmatrix aus Polyvinylpyrrolidon (PVP)-haltigen Partikeln oder Polysaccharide-Partikel (Agarose, Zellulose, Dextran), welche kovalent an hydrophile funktionelle Gruppen gekoppelt sind. Die Trennmatrix kann beispielsweise durch Filtration abgetrennt werden. Um die Kosten der Stabilisierung gering zu halten ist die kostengünstige Produktion der Trennmatrix, sowie die Regenerierbarkeit der Trennmatrix von zentraler Bedeutung. Zur Regeneration werden zumeist starke Basen verwendet, um Bindungen zwischen den Polyphenolen und der Trennmatrix zu lösen.

Gängige Verfahren zur effizienten Stabilisierung von Bier durch Entfernung von Polyphenolen und Polyphenol-Protein Komplexen basieren auf der Verwendung von Polyvinylpyrrolidon-konjugierten Partikeln oder Polyvinylpolypyrrolidon (PVPP)-Partikeln. Hierbei binden jeweils die Vinylpyrrolidon-Einheiten mit hoher Effizienz über Wasserstoffbrückenbindungen an Polyphenole und eignen sich sowohl in kontinuierlichen als auch chargenweisen Stabilisierungsverfahren.

PVP-Polymere können als Homo- oder Copolymere verwendet werden. Bei der Synthese von Copolymeren ermöglicht die Auswahl geeigneter Monomere die Anpassung der physikalischen und chemischen Eigenschaften der resultierenden Copolymere an die entsprechenden Anforderungen bei der Stabilisierung von Getränken. Ziel hierbei ist es Copolymere mit optimierter Effizienz der Bindung von trübungserzeugenden Substanzen zu bilden, beispielsweise durch zusätzliche funktionelle Gruppe im Polymer, welche die Bindungseffizienz beeinflussen. Des Weiteren beeinflusst die Auswahl der Monomere die Regenerierbarkeit der Trennmatrix, sowie die Effizienz des Einbaus von N-Vinylpyrrolidon-Einheiten in das Polymer im Rahmen der Synthese.

Das Polymerisationsverfahren ist ein komplexer Prozess. In der Regel erfolgt die Polymerisation von PVP als radikalische Suspensionspolymerisation oder "Popcorn"-Polymerisation.

Bei der radikalischen Suspensionspolymerisation werden Polymere innerhalb von Monomer-Tröpfchen oder Monomer-Lösungsmittel-Tröpfchen gebildet. Die Tröpfchen werden hierbei in der Regel durch Rühren in einer kontinuierlichen Phase dispergiert, in welcher weder das Monomer noch das resultierende Polymer löslich ist. Um zu verhindern, dass die einzelnen Tröpfchen sich miteinander verbinden und damit die Suspension aufgetrennt wird, werden Stabilisatoren zugesetzt, wie beispielsweise Polyvinylalkohol, Bariumsulfat, Methylcellulose oder Gelatine.

Bei der sogenannten Popcorn-Polymerisation handelt es sich um eine radikalische Polymerisation, welche unlösliche Partikel mit unregelmäßiger Oberfläche und hoher Vernetzungsdichte bildet. Voraussetzung dafür, dass eine Popcorn-Polymerisation stattfindet ist, dass die Monomere eine geringe Löslichkeit, jedoch hohe Quellfähigkeit aufweisen. Popcorn-Polymerisation führt zur Bildung hochgradig quervernetzter, wasserunlöslicher PVPP Partikel.

Die molekulare Zusammensetzung und physikochemischen Eigenschaften der resultierenden Polymere wird wesentlich beeinflusst durch die Syntheseparameter, wie beispielsweise die Konzentration der Monomere, die Temperatur, die Art und Konzentration des Polymerisationsstarters, die Verwendung von Stabilisatoren, die Wahl der Comonomere, sowie dem Lösungsmittel.

### Zusammenfassung der Erfindung

Ziel der vorliegenden Erfindung ist es ein Verfahren bereitzustellen zur einfachen und kosteneffizienten Herstellung einer Trennmatrix aus einem Polyvinylpyrrolidon-Copolymer mit hohem Anteil an Vinylpyrrolidon-Monomereinheiten, welche dazu geeignet ist in einem Verfahren zur Stabilisierung von Getränken verwendet zu werden und anschließend verlustfrei regeneriert werden kann. Dieses Ziel wird gemäß der vorliegenden Erfindung durch die folgenden Ausführungsformen und Aspekte der Erfindung erreicht.

Eine erste Ausführungsform der vorliegenden Erfindung bildet ein Verfahren zur Herstellung eines Polyvinylpyrrolidon-Copolymers umfassend die Schritte:
(a) Vermengen von N-Vinylpyrrolidon, einer wasserunlöslichen, vernetzenden Komponente und einem Hydrolyse-stabilen Acrylsäure- oder Methacrylsäure-haltigen Monomer;
(b) Zugabe der organischen Mischung aus Schritt (a) zu einer wässrigen Salzlösung mit organischen Stabilisator; wobei die Konzentration des Salzes ausreichend hoch ist, um die Löslichkeit der N-Vinylpyrrolidon-Monomere in der wässrigen Salzlösung zu limitieren;
(c) Initiieren einer radikalischen Suspensions-Copolymerisationsreaktion;
(d) Inkubieren der Reaktionsmischung bei einer Temperatur zwischen 40 °C und 90 °C unter ständigem Rühren, um ein Polyvinylpyrrolidon-Copolymer zu bilden; und
(e) Waschen des Polyvinylpyrrolidon-Copolymers;
wobei das Polyvinylpyrrolidon-Copolymer mindestens 70 Masse-% N-Vinylpyrrolidon-Einheiten umfasst.

Eine weitere Ausführungsform der vorliegenden Erfindung betrifft eine poröse, hydrophile Trennmatrix zur Stabilisierung eines Getränks, umfassend ein Polyvinylpyrrolidon-Copolymer welches mindestens 70 Masse-% N-Vinylpyrrolidon-Einheiten umfasst.

Eine weitere Ausführungsform der Erfindung betrifft eine poröse, hydrophile Trennmatrix zur Stabilisierung eines Getränks, umfassend ein Polyvinylpyrrolidon-Copolymer, welches nach einem Verfahren gemäß der obig beschriebenen Ausführungsformen hergestellt wurde.

Eine weitere Ausführungsform bildet ein Verfahren zur Stabilisierung eines Getränks das eine trübungserzeugende Verbindung enthält, umfassend die folgenden Schritte:
(a) Bereitstellen einer porösen, hydrophilen Trennmatrix nach einem der Verfahren der obig beschriebenen Ausführungsformen;
(b) Zusammenführen eines Getränks, das eine trübungserzeugende Verbindung enthält, mit der porösen, hydrophilen Trennmatrix unter Bedingungen, welche die Bindung von mindestens einem Teil der trübungserzeugenden Verbindungen an die Trennmatrix ermöglichen; und
(c) Bindung von mindestens einem Teil der trübungserzeugenden Verbindungen an die poröse, hydrophile Trennmatrix, wodurch mindestens ein Teil der trübungserzeugenden Verbindungen aus dem Getränk entzogen wird.

Eine weitere Ausführungsform der vorliegenden Erfindung bildet die Verwendung einer Trennmatrix, die basierend auf einem Verfahren der hierin beschriebenen Ausführungsformen hergestellt wurde in einem Verfahren zur Stabilisierung eines Getränks gemäß der hierin beschriebenen Ausführungsformen.

Die vorliegende Erfindung ermöglicht die einfache, effiziente und kostengünstige Synthese eines PVP-Copolymers, welches einen hohen Anteil an N-Vinylpyrrolidon-Einheiten aufweist und dadurch zur Stabilisierung von Getränken durch Bindung trübungserzeugender Phenolkomplexe besonders geeignet ist. Nach Verwendung können die PVP-Copolymere der Trennmatrix annährend verlustfrei regeneriert werden und damit mehrmals im Verfahren zur Stabilisierung eines Getränks genutzt werden. Hierdurch können die Kosten des Verfahrens reduziert werden.

Weitere Aspekte, Ausführungsformen, Merkmale und Vorteile der vorliegenden Erfindung werden aus der folgenden detaillierten Beschreibung ersichtlich. Es sollte jedoch berücksichtigt werden, dass die detaillierte Beschreibung und die spezifischen Beispiele, während sie bevorzugte Ausführungsformen der Erfindung angeben, nur zur Veranschaulichung gegeben werden, da verschiedene Änderungen und Modifikationen innerhalb des Geistes und des Umfangs der Erfindung für den Fachmann aus der detaillierten Beschreibung ersichtlich werden.

### Beschreibung der Figuren

Die Erfindung wird in den beiliegenden Figuren genauer beschrieben.

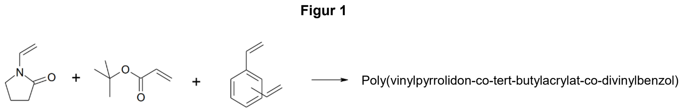

**Figur 1****:** Reaktionsschema der Synthese von Poly(vinylpyrrolidon-co-tert-butylacrylat-co-divinylbenzol) aus N-Vinylpyrrolidon, Tert-Butylacrylat und Divinylbenzol.

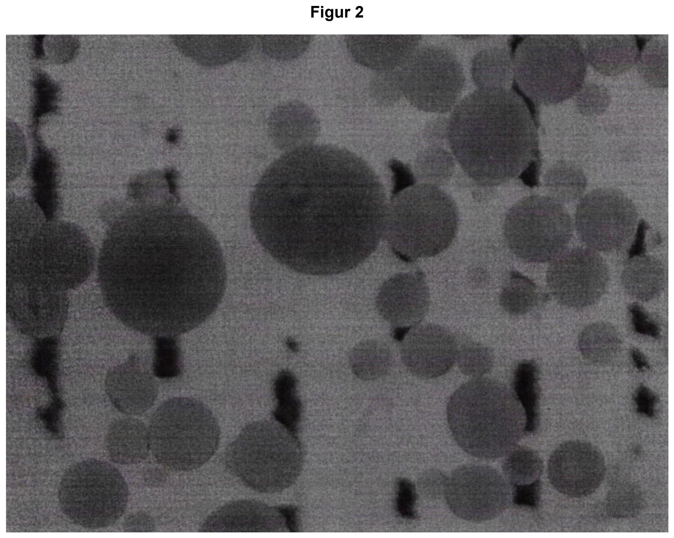

**Figur 2****:** Lichtmikroskopische Aufnahme sphärischer PVP-Copolymer Partikel mit einer Partikelgröße von 100-400 µm.

### Detaillierte Beschreibung der Erfindung

Alle hierin zitierten Veröffentlichungen, Patente und Patentanmeldungen werden durch Bezugnahme in ihrer Gesamtheit für sämtliche Zwecke miteinbezogen, so als wäre für jede Veröffentlichung spezifisch und individuell angegeben, dass diese durch Referenz miteinbezogen ist.

Alle hierin verwendeten technischen und wissenschaftlichen Begriffe haben die Bedeutung die ihnen üblicherweise durch einen Fachmann auf dem Gebiet der vorliegenden Erfindung zugeschrieben werden, solange keine abweichende Definition angegeben ist.

Die Verwendung des Begriffs "umfassend" sowie anderer grammatikalischer Formen wie "umfasst" und "umfasste" ist nicht einschränkend. Die Begriffe "umfassend" "umfasst" und "umfasste" sollten als offene Beschreibung einer Ausführungsform der vorliegenden Erfindung verstanden werden, die zusätzliche technische Merkmale neben den ausdrücklich genannten technischen Merkmalen enthalten kann, aber nicht muss. Im gleichen Sinne ist der Begriff "betreffend" sowie andere jeweilige grammatikalische Formen wie "betrifft" und "betraf" nicht einschränkend. Das Gleiche gilt für den Begriff "einschließlich" und andere grammatikalische Formen wie "einschließt" und "eingeschlossen". Ferner sind die Begriffe "umfassend", "betreffend" und "einschließlich" sowie alle grammatikalischen Formen davon nicht so zu interpretieren, dass sie sich ausschließlich auf Ausführungsformen beziehen, die zusätzliche Merkmale zu den ausdrücklich genannten beinhalten. Diese Begriffe beziehen sich ebenso auf Ausführungsformen, die nur aus den ausdrücklich erwähnten Merkmalen bestehen.

Abschnittsüberschriften in der gesamten Beschreibung dienen nur organisatorischen Zwecken. Insbesondere sind sie nicht als Einschränkungen für die darin beschriebenen verschiedenen Ausführungsformen gedacht, und es ist zu verstehen, dass Ausführungsformen (und darin enthaltene Merkmale), die unter einer Überschrift beschrieben werden, frei mit Ausführungsformen (und darin enthaltenen Merkmalen) kombiniert werden können, die unter einer anderen Überschrift beschrieben werden.

Wie hierin verwendet, kann "ein" oder "eine" bedeuten, dass es sich um ein oder mehrere handelt. Wie hierin verwendet, kann "ein weiteres" mindestens ein zweites oder mehr bedeuten. Des Weiteren schließen, sofern aus dem Kontext nicht anderweitig erforderlich, Begriffe im Singular auch Pluralformen ein und Pluralbegriffe schließen den Singular ein.

Wie hierin verwendet, bezieht sich "etwa" auf einen numerischen Wert, einschließlich, zum Beispiel, ganzer Zahlen, Brüche, und Prozentsätze, unabhängig davon, ob sie ausdrücklich angegeben sind. Der Begriff "etwa" bezieht sich im Allgemeinen auf einen Bereich numerischer Werte, den eine Fachperson als gleichwertig mit dem angegebenen Wert betrachten würde (zum Beispiel mit derselben Funktion oder demselben Ergebnis).

Der Begriff "Polymer" bezeichnet eine Substanz, die aus einer Vielzahl von sich wiederholenden strukturellen Einheiten (Monomeren) besteht, die durch chemische Bindungen zu einer Kette oder einem Netzwerk verknüpft sind. Die repetitiven Einheiten können gleich oder verschieden sein und das resultierende Polymer kann sowohl linear, als auch verzweigt vorliegen. Der Begriff "Copolymer" bezeichnet ein Polymer, das aus mindestens zwei strukturell unterschiedlichen Arten von Monomeren besteht, die chemisch miteinander verknüpft sind. Im Gegensatz dazu ist bezeichnet der Begriff "Homopolymer" ein Polymer, welches aus strukturell gleichen Monomeren aufgebaut ist.

Wie hierin verwendet, bezeichnet der Begriff "Polyvinylpyrrolidon-Copolymer", beziehungsweise "PVP-Copolymer", ein Copolymer bestehend aus Polyvinylpyrrolidon (PVP) und mindestens einem weiteren, strukturell unterschiedlichen Monomer.

Der Begriff "Divinylbenzol" beschreibt aromatische Kohlenwasserstoffe bestehend aus einem Benzolring, welcher durch zwei Vinylgruppen substituiert vorliegt. Die Substituenten können in 1,2- (ortho), 1,3- (meta) oder 1,4- (para) Konstitution am Benzolring vorliegen.

Wie hierin verwendet, bezeichnet der Begriff "wasserunlöslich" eine Substanz, sich in Wasser unter Standardbedingungen, also bei 20 °C und atmosphärischen Druck, nicht löst. Eine Substanz wird als wasserunlöslich angesehen, wenn ihre Löslichkeit in Wasser weniger als 0,1 Gewichtsprozent beträgt. Der Begriff umfasst Polymere und Copolymere, die in Kontakt mit Wasser ihre Form und Struktur weitgehend behalten.

Der Begriff "organisch", wie hierin verwendet, bezeichnet eine auf Kohlenstoff basierende Verbindung, typischerweise in Kombination mit Wasserstoff. Organische Verbindungen können einen natürlichen Ursprung haben, wie beispielsweise pflanzliche oder tierische Stoffe, oder synthetisch hergestellt werden.

Wie hierin verwendet, bezieht sich der Begriff "vernetzend" auf einen chemischen Prozess, bei dem Polymerketten durch kovalente oder andere stabile chemische Bindungen miteinander verbunden werden, um ein dreidimensionales Netzwerk zu bilden.

Wie hierin verwendet, bezeichnet der Begriff "Hydrolyse-stabil" eine Substanz, welche beständig ist gegenüber Hydrolyse in wässrigen Lösungen, beispielsweise unter stark basischen pH-Bedingungen.

Der Begriff "Suspensionspolymerisation" bezeichnet ein Verfahren zur Herstellung von Polymeren, bei dem Monomere in einer nicht mischbaren, kontinuierlichen Phase dispergiert werden, in der Regel durch mechanische Agitation. Hierbei bilden sich Tröpfchen des Monomers, die von einem Stabilisator umgeben sind. Der Begriff "radikalische Suspensionspolymerisation" bezeichnet ein Verfahren zur Suspensionspolymerisation durch die Bildung von radikalischen Spezies.

Wie hierin verwendet, bezeichnet der Begriff "Stabilisator" eine Substanz, die die Stabilität der dispergierten Monomertröpfchen in der kontinuierlichen Phase bei der Suspensionspolymerisation gewährleistet. Der Stabilisator verhindert die Koaleszenz, also das Zusammenfließen der Tröpfchen. Der Begriff "Emulgator" bezeichnet einen amphiphilen Stabilisator, welcher die Grenzflächenspannung zwischen zwei nicht miteinander mischbaren Flüssigkeiten verringert.

Der Begriff "Inertgas" bezeichnet ein Gas, welches eine äußerst geringe Reaktivität aufweist. Beispiele für Inertgase sind molekularer Stickstoff, Argon, molekulares Helium, Neon, Krypton, Xenon und Radon.

Wie hierin verwendet, bezeichnet der Begriff "porös" ein Material, welches Hohlräume oder Poren in seiner Struktur aufweist. Poröse Materialien weisen eine hohe spezifische Oberfläche auf, wodurch eine Interaktion und chemische Reaktivität mit umgebenden Substanzen gefördert wird.

Der Begriff "Stabilisierung" eines Getränks bezeichnet ein Verfahren, bei welchem die physikalische und chemische Stabilität eines Getränks und damit seine Lagerfähigkeit erhöht wird. Dies kann die Vermeidung von unerwünschten Veränderungen umfassen, wie Trübung, Sedimentbildung, Geschmacksveränderungen und mikrobiologische Kontaminationen.

Der Begriff "Trennmatrix" bezeichnet ein System, das die selektive Trennung, Filtration oder Separation von Komponenten in Flüssigkeiten ermöglicht. Die Trennmatrix besteht typischerweise aus porösen Materialien, die spezifische Eigenschaften wie Porengröße, Oberflächenchemie und mechanische Stabilität aufweisen, um die gezielte Trennung von Molekülen, Ionen oder Partikeln basierend auf deren physikalischen und chemischen Eigenschaften zu ermöglichen.

Wie hierin verwendet, bezeichnet der Begriff "trübungserzeugende Verbindung" eine Verbindung, die in einer Flüssigkeit zur Bildung von einer Trübung führt. Dies umfasst Polyphenole, welche mit Proteinen oder anderen Polyphenolen interagieren können, was zur Aggregation und damit zur Trübung einer Flüssigkeit führt.

### Verfahren zur Herstellung eines Polyvinylpyrrolidon-Copolymers

Ein Aspekt der vorliegenden Erfindung betrifft ein Verfahren zur Herstellung eines PVP-Copolymers.

Das Verfahren umfasst die folgenden Schritte: (a) Vermengen von N-Vinylpyrrolidon, einer wasserunlöslichen, vernetzenden Komponente und einem Hydrolyse-stabilen Acrylsäure- oder Methacrylsäure-haltigen Monomer; (b) Zugabe der organischen Mischung aus Schritt (a) zu einer wässrigen Salzlösung mit organischen Stabilisator; wobei die Konzentration des Salzes ausreichend hoch ist, um die Löslichkeit der N-Vinylpyrrolidon-Monomere in der wässrigen Salzlösung zu limitieren, beziehungsweise zu verhindern; (c) Initiieren einer radikalischen Suspensions-Copolymerisationsreaktion; (d) Inkubieren der Reaktionsmischung bei einer Temperatur zwischen 40 °C und 90 °C unter ständigem Rühren, um ein PVP-Copolymer zu bilden; und (e) Waschen des PVP-Copolymers; wobei das PVP-Copolymer mindestens 70 Masse-% N-Vinylpyrrolidon-Einheiten umfasst.

Das Verfahren ermöglicht die Synthese von PVP-Copolymeren mit einem hohen Anteil an N-Vinylpyrrolidon-Einheiten. Ein hoher Anteil an N-Vinylpyrrolidon ermöglicht es das PVP-Copolymer zur effizienten Stabilisierung von Getränken zu verwenden, wobei trübungserzeugender Polyphenol-Verbindungen über Wasserstoffbrücken-Bindungen an die N-Vinylpyrrolidon-Einheiten binden und dadurch aus dem Getränk entfernt werden können, um die Haltbarkeit des Getränks zu erhöhen und die visuelle Erscheinung zu Verbessern. Ein hoher Anteil an N-Vinylpyrrolidon in den PVP-Copolymeren einer entsprechenden Trennmatrix führt zu einer hohen Bindungseffizienz trübungserzeugender Verbindungen. Zudem senkt ein Verfahren, welches den effizienten Einbau von N-Vinylpyrrolidon-Einheiten in das PVP-Copolymer ermöglicht die Kosten der Herstellung einer PVP-Trennmatrix, nachdem ein hoher Anteil des für die Synthese genutzten N-Vinylpyrrolidons reagiert und damit kaum Rückstände an nicht eingebauten N-Vinylpyrrolidon vorliegen. Das erfindungsgemäße Verfahren ermöglicht die Synthese eines PVP-Copolymers mit mindestens 70 Masse-%, oder vorzugsweise von mindestens 72 Masse-%, 74 Masse-%, 76 Masse-%, 78 Masse-%, 80 Masse-%, 85 Masse-%, 90 Masse-%, 91 Masse-%, 92 Masse-%, 93 Masse-%, 94 Masse-%, 95 Masse-%, 96 Masse-%, 97 Masse-%, 98 Masse-%, oder 99 Masse-% N-Vinylpyrrolidon-Einheiten.

In einer bevorzugten Ausführungsform des Verfahrens zur Herstellung eines PVP-Copolymers ist das Hydrolyse-stabile Acrylsäure- oder Methacrylsäure-haltige Monomer ein Tert-butylester der Acrylsäure, vorzugsweise Tert-butylacrylat, oder der Methacrylsäure, beispielsweise Tert-butylmethacrylat. Vorzugsweise liegt das Hydrolyse-stabile Acrylsäure- oder Methyacrylsäure-haltige Monomer in der organischen Mischung in Schritt (a) mit einem Masseanteil von 1 bis 25 Masse-% vor, bezogen auf die Masse des N-Vinylpyrrolidons. In stärker bevorzugten Ausführungsformen liegt das Hydrolyse-stabile Acrylsäure oder Methacrylsäure-haltige Monomer in der organischen Mischung in Schritt (a) mit einem Masseanteil von 5 bis 20 Masse-% vor bezogen auf die Masse des N-Vinylpyrrolidons, beispielsweise mit einem Masseanteil von 10 bis 15 Masse-%. Die Konzentration des Hydrolyse-stabilen Acrylsäure- oder Methacrylsäure-haltigen Monomers nach Zugabe zur wässrigen Salzlösung in Schritt (b) liegt vorzugsweise in einem Bereich zwischen 5 g/l bis 100 g/l, beispielsweise 25 g/l bis 75 g/l, 35 g/l bis 65 g/l vor. Am meisten bevorzugt ist eine Konzentration von 40 g/l bis 60 g/l. In bevorzugten Ausführungsformen ist das Hydrolyse-stabile Acrylsäure- oder Methacrylsäure-haltige Monomer Tert-butylacrylat oder Tert-butylmethacrylat, welches in der organischen Mischung in Schritt (a) mit einem Masseanteil von 12,5 Masse-% vorliegt, bezogen auf das Gewicht des N-Vinylpyrrolidons, und mit einer Konzentration in der wässrigen Salzlösung in Schritt (b) von 40 g/l bis 60 g/l. Der Einbau eines Hydrolyse-stabilen Acrylsäure- oder Methacrylsäure-haltigen Monomers ermöglicht die verlustfreie, beziehungsweise annährend verlustfreie Regenerierbarkeit der PVP-Copolymere unter alkalischen Bedingungen, beispielsweise bei einem pH-Wert von 11 bis 13. Durch eine effiziente, verlustfreie Regeneration kann das PVP-Copolymer als Trennmatrix wiederverwendet werden, wodurch die Kosten von Verfahren zur Stabilisierung von Getränken reduziert werden können. Vorzugsweise erfolgt die Regeneration der PVP-Copolymere mit einem Verlust pro Regenerationszyklus von weniger als 5%, beispielsweise weniger als 4%, 3%, 2%, 1%, 0,5%, 0,1%, 0,05%, oder weniger als 0,001%.

In einer weiteren Ausführungsform ist die wasserunlösliche, vernetzende Komponente aus einer Liste ausgewählt, die Folgendes umfasst: Divinylbenzol (1,2-Divinylbenzol, 1,3-Divinylbenzol, 1,4-Divinylbenzol, oder ein Isomer-Gemisch aus 1,2-Divinylbenzol und 1,4-Divinylbenzol), Ethylenglykoldimethacrylat, Ethylenglykoldiacrylat, Acryl- und Methacrylsäureester von Di-, Tri- oder Tetraalkoholen, wie beispielsweise Propylenglykole, Glycerin, oder Pentaerythrit, Acryl- oder Methacrylamide von bis- oder tris-sekundären Aminen, wie beispielsweise Piperazindiacrylat, Piperazindimethacrylat oder 1,3,5-Triacryloylhexahydro-1,3,5-triazin, Methylenbisarcylamid und Methylenbismethacrylamid. Vorzugsweise ist die wasserunlösliche, vernetzende Komponente 1,2-Divinylbenzol und/oder 1,4-Divinylbenzol. Vorzugsweise liegt die vernetzende Komponente in der organischen Mischung in Schritt (a) mit einem Masseanteil von 0,5 bis 12,5 Masse-% vor, bezogen auf die Masse des N-Vinylpyrrolidons. In stärker bevorzugten Ausführungsformen liegt die vernetzende Komponente in der organischen Mischung in Schritt (a) mit einem Masseanteil von 2,5 bis 10 Masse-% vor bezogen auf die Masse des N-Vinylpyrrolidons, beispielsweise von 5 bis 7,5 Masse-%. Der Konzentration der vernetzenden Komponente nach Zugabe zur wässrigen Salzlösung in Schritt (b) liegt vorzugsweise in einem Bereich zwischen 2 g/l und 50 g/l, beispielsweise zwischen 12,5 g/l und 37,5 g/l, vorzugsweise in einem Bereich zwischen 17,5 g/l und 32,5 g/l. Am meisten bevorzugt ist eine Konzentration von 20 g/l bis 25 g/l. Bevorzugt sind Ausführungsformen in denen die vernetzende Komponente Divinylbenzol ist, welches in der organischen Mischung in Schritt (a) mit einem Masseanteil von 6,25 Masse-% vorliegt, bezogen auf das Gewicht des N-Vinylpyrrolidons, und mit einer Konzentration in der wässrigen Salzlösung in Schritt (b) von 20 g/l bis 25 g/l.

Die Auswahl der vernetzenden Komponente kann die physikalischen und chemischen Eigenschaften des resultierenden PVP-Copolymers beeinflussen. Zudem kann die vernetzende Komponente die Effizienz der Polymerisationsreaktion beeinflussen. Um ein Lösen der vernetzenden Komponente in der wässrigen Salzlösung zu verhindern wird im erfindungsgemäßen Verfahren eine vernetzende Komponente verwendet, welche nicht in der wässrigen Phase löslich ist, um hierdurch einen effizienten Einbau der vernetzenden Komponente in das PVP-Copolymer zu erreichen.

Am meisten bevorzugt ist eine Ausführungsform in welcher das Hydrolyse-stabile Acrylsäure- oder Methacrylsäure-haltige Monomer Tert-butylacrylat oder Tert-butylmethacrylat ist und die wasserunlösliche, vernetzende Komponente Divinylbenzol ist.

In einer Ausführungsform besteht der organische Stabilisator aus einer Kombination aus mindestens zwei polymeren, organischen Stabilisatoren, vorzugsweise einer Kombination aus einem Polyacrylsäure-Copolymer und Poly(styrolsulfonat). Besonders bevorzugt ist eine Ausführungsform, wobei das Polyacrylsäure-Copolymer Thixol 53L^{™} ist oder ein Polyacrylsäure-Copolymer-Natriumsalz, hergestellt aus beispielsweise Thixol 53L^{™}.

Die Verwendung eines Stabilisators ist notwendig um bei der radikalischen Suspensionspolymerisation die Bildung und Stabilität der Monomertröpfchen in der wässrigen Phase zu gewährleisten und um zu verhindern, dass diese während der Polymerisation koagulieren. Eine Koalenszenz der Tröpfchen zu größeren Agglomeraten würde zu einer Inhomogenität der resultierenden Polymere führen. Ferner hat die Wahl des Stabilisators Einfluss auf die Effizienz der Synthese und die Zusammensetzung des PVP-Copolymers. Aufgrund seiner hohen Polarität besitzt N-Vinylpyrrolidon eine hohe Löslichkeit in polaren Lösungsmitteln, was unter anderem zu einer geringen Effizienz des Einbaus von N-Vinylpyrrolidon in das Polymer bei der radikalischen Suspensionspolymerisation führt. Entsprechend ist die Wahl geeigneter Stabilisatoren bei der Synthese von PVP von Bedeutung, um einen effizienten Einbau von N-Vinylpyrrolidon in das Polymer zu gewährleisten und damit, um eine kosteneffizienten Synthese zu ermöglichen.

In einer Ausführungsform ist das Salz in Schritt (b) ausgewählt aus einer Liste umfassend: wasserlösliche Chloride, Sulfate, Carbonate, und Phosphate der Alkalimetalle und Erdalkalimetalle, wie Lithium, Natrium, Kalium Rubidium, Cäsium, Magnesium, Calcium, Barium und Strontium. Bevorzugt ist eine Ausführungsform in welcher das Salz in Schritt (b) NaCl ist mit einer Massenkonzentration in der wässrigen Lösung zwischen 200 g/l und 264 g/l, stärker bevorzugt zwischen 250 g/l und 264 g/l.

N-Vinylpyrrolidon weist eine hohe Löslichkeit in wässrigen Lösungen auf, ist jedoch nahezu unlöslich in konzentrierten Salzlösungen. Im erfindungsgemäßen Verfahren wird das Lösen von N-Vinylpyrrolidon in der wässrigen Phase dadurch verhindert, dass die wässrige Phase eine Salzkonzentration aufweist, die ausreichend hoch ist, um die Löslichkeit der N-Vinylpyrrolidon-Monomere in der wässrigen Salzlösung zu limitieren. Hierdurch wird erreicht, dass N-Vinylpyrrolidon in den Monomertröpfchen bei der Suspensionspolymerisation vorliegt und damit möglichst vollständig in das PVP-Copolymer eingebaut werden kann. Die Kosten des Verfahrens werden durch den annährend vollständigen Einbau des verwendeten N-Vinylpyrrolidons reduziert. Das erfindungsgemäße Verfahren ermöglicht die Synthese eines PVP-Copolymers, wobei mindestens 75%, oder vorzugsweise mindestens 78%, 80%, 82%, 84%, 86%, 88%, 90%, 92%, 94%, 96%, 98%, oder 99% des eingesetzten N-Vinylpyrrolidons in das Polymer eingebaut werden.

In einer Ausführungsform wird die radikalische Polymerisationsreaktion initiiert durch die Zugabe eines in der wässrigen Phase nicht löslichen, radikalischen Polymerisationsstarters, welcher durch thermische Anregung, Strahlung oder Redoxreaktion zur Radikalbildung angeregt wird. Vorzugsweise wird ein Radikalpolymerisationsstarter verwendet der aus einer Liste ausgewählt ist, die Folgendes umfasst: Azobis(isobutyronitril) (AIBN), Dimethyl-2,2'-azobis(2-methylpropionat) (AIBME), Dibenzoylperoxid, Dicumylperoxid, Di-tert-butylperoxid, und 2,2-Dimethoxy-2-phenylacetophenon. In einer besonders bevorzugten Ausführungsform wird als Radikalpolymerisationsstarter AIBN verwendet mit einem Masseanteil zwischen 0,1 Masse-% und 1 Masse-%, 0,2 Masse-% und 0,8 Masse-%, 0,3 Masse-% und 0,7 Masse-% oder 0,4 Masse-% und 0,6 Masse-%. Der Masseanteil des Radikalpolymerisationsstarters kann Einfluss auf das Molekulargewicht des resultierenden Produkts der Polymerisation haben, wobei ein hoher Masseanteil zu einem geringeren Molekulargewicht des Polymers führt.

In einer Ausführungsform werden die Komponenten in Schritt (a) in einem organischen Lösungsmittel vermengt, wobei das organische Lösungsmittel aus einer Liste ausgewählt ist, die Folgendes umfasst: Ethylacetat, Propylacetat, n-Butylacetat, Isobutylacetat, tert-Butylacetat, n-Propanol, Isopropanol, oder höhere Homologe der Alkohole wie n-Hexanol, Cyclohexanol, Dodecan-1-ol, aliphatische und cycloaliphatische Kohlenwasserstoffe mit mehr als 6 Kohlenstoff-Atomen, wie n-Hexan, n-Heptan oder deren Isomere, aromatische oder arylaliphatische Verbindungen wie Toluol, o-, m-, oder p-Xylole, Ethylbenzol, Cumol und Mesitylen. Die Wahl des organischen Lösungsmittels kann die Porenbildung der PVP-Copolymer-Partikel beeinflussen.

In einer Ausführungsform wird die Reaktionsmischung in Schritt (d) bei einer Temperatur zwischen 35 °C und 90 °C inkubiert, vorzugsweise bei einer Temperatur zwischen 40 °C und 85 °C, 45 °C und 80 °C, 50 °C und 75 °C oder zwischen 55 °C und 70 °C.

In einer bevorzugten Ausführungsform wird die Reaktion bei einer niedrigeren Temperatur eingeleitet und die Temperatur anschließend erhöht, sobald die ersten PVP-Copolymerpartikel gebildet werden. Beispielsweise wird die Reaktion eingeleitet bei einer Temperatur von maximal 35 °C, 40 °C, 45 °C, 50 °C, 55 °C, 58 °C, 60 °C, 62 °C, 64 °C oder 65 °C. In einer besonders bevorzugten Ausführungsform wird die Reaktion eingeleitet bei einer Temperatur von 62 °C bis maximal 65 °C und die Temperatur anschließend auf 65.5 °C bis 70 °C erhöht. Die Temperatur, bei welcher die Synthese der PVP-Copolymere erfolgt, kann die Zusammensetzung und Eigenschaften des resultierenden Polymers beeinflussen.

In einer Ausführungsform liegt die Konzentration der N-Vinylpyrrolidon-Monomere in Schritt (b) zwischen 50 mmol/I und 1 mol/l, vorzugsweise wobei die Konzentration des N-Vinylpyrrolidon-Monomers in Schritt (b) zwischen 200-500 mmol/I liegt. In alternativen Ausführungsformen liegt die Konzentration der N-Vinylpyrrolidon-Monomere in Schritt (b) zwischen 50 mmol/I und 5 mol/l, beispielsweise zwischen 3 mol/I und 4 mol/l. Die Massenkonzentration des N-Vinylpyrrolidon-Monomers in Schritt (b) liegt vorzugsweise zwischen 5 g/l und 1000 g/l. In bevorzugten Ausführungsformen liegt die Massenkonzentration des N-Vinylpyrrolidon-Monomers in Schritt (b) zwischen 300 g/l und 400 g/l, 320 g/l und 360 g/l, oder 340 und 350 g/l. Die Konzentration der N-Vinylpyrrolidon-Monomere in Schritt (b) kann die Syntheseeffizienz und die Zusammensetzung der resultierenden PVP-Copolymere beeinflussen.

In einer Ausführungsform liegen die wasserunlösliche, vernetzende Komponente und das N-Vinylpyrrolidon-Monomer in einem molaren Verhältnis zwischen 1:1 und 1:100 vor. Vorzugsweise liegen die wasserunlösliche, vernetzende Komponente und das N-Vinylpyrrolidon-Monomer in einem molaren Verhältnis zwischen 1:10 und 1:25. In bevorzugten Ausführungsformen liegen die wasserunlösliche, vernetzende Komponente, das N-Vinylpyrrolidon-Monomer und das Hydrolyse-stabile Acrylsäure- oder Methacrylsäure-haltige Monomer in einem Masseverhältnis von ungefähr 1:16:2 vor.

In einer Ausführungsform erfolgt das Waschen des PVP-Copolymers in Schritt (e) durch Zugabe von Wasser zu dem PVP-Copolymer. Das Wasser kann anschließend durch Dekantieren oder Absaugen entfernt werden. Vorzugsweise wird dieser Schritt mehrfach wiederholt, beispielsweise 1-mal, 2-mal, 3-mal, 4-mal oder 5-mal, um die Reinheit des PVP-Copolymers zu erhöhen. Um die Reinheit weiterhin zu erhöhen, kann das PVP-Copolymer anschließend mit Ethanol gewaschen werden. Das Waschen mit Ethanol kann ebenfalls mehrfach wiederholt werden.

In einer Ausführungsform wird vor Schritt (e) das organische Lösungsmittel durch Dekantieren oder Absaugen entfernt.

In einer Ausführungsform wird die Reaktionsmischung vor Schritt (d) mit einem Inertgas überlagert. Vorzugsweise wird die wässrige Salzlösung mit dem organischen Stabilisator in Schritt (b) vor Zugabe der organischen Mischung aus Schritt (a) mit einem Inertgas überlagert wird und die Reaktionsmischung vor Schritt (d) erneut mit einem Inertgas überlagert. Das Inertgas kann ausgewählt sein aus einer Liste umfassend: molekularer Stickstoff, Argon, Kohlenstoffdioxid und molekulares Helium. Die Überlagerung der Reaktionsmischung mit Stickstoff schützt vor unerwünschten Nebenreaktionen mit Sauerstoff, wodurch die Polymerisationsreaktion verlangsamt oder gestoppt werden könnte und damit die Ausbeute und Reaktionsgeschwindigkeit beeinträchtigt werden könnte.

In einer Ausführungsform enthält die wässrige Salzlösung in Schritt (b) einen Puffer. Vorzugsweise enthält die wässrige Salzlösung in Schritt (b) Natriumbicarbonat als Puffer.

In einer Ausführungsform bildet das Poylvinylpyrrolidon-Copolymer poröse Partikel mit einem Durchmesser von 10 µm bis 500 µm. Vorzugsweise beträgt der Durchmesser der porösen Partikel 100 µm bis 300 µm. Die Partikelporen der porösen Partikel können einen Volumenanteil von 80-99% aufweisen. Die porösen Partikel können eine sphärische Form haben.

Bevorzugt ist eine Ausführungsform des Verfahrens zur Herstellung eines PVP-Copolymers, umfassend die Schritte:
(a) Vermengen von N-Vinylpyrrolidon, einem Gemisch aus 1,2-Divinylbenzol und 1,4-Divinylbenzol und Tert-butylacrylat;
(b) Zugabe der organischen Mischung aus Schritt (a) zu einer wässrigen NaCl-Salzlösung mit einer Massenkonzentration an NaCl von 250-264 g/l und mit einem Polyacrylat-Copolymer wie beispielsweise dem Natrium-Salz von Thixol 53L als organischer Stabilisator;
(c) Initiieren einer radikalischen Suspensions-Copolymerisationsreaktion durch Zugabe von AIBN;
(d) Inkubieren der Reaktionsmischung bei einer Temperatur von zunächst 62-65 °C unter ständigem Rühren, um ein PVP-Copolymer zu bilden und die Temperatur auf 68 °C bis 70 °C erhöht wird sobald die ersten PVP-Copolymerpartikel gebildet werden; und
(e) Waschen des PVP-Copolymers;
wobei das PVP-Copolymer mindestens 72 Masse-% N-Vinylpyrrolidon-Einheiten umfasst.

Am meisten bevorzugt ist eine Ausführungsform des Verfahrens zur Herstellung eines PVP-Copolymers, umfassend die Schritte:
(a) Vermengen von:
   (i) N-Vinylpyrrolidon,
   (ii) einem Gemisch aus 1,2-Divinylbenzol und 1,4-Divinylbenzol, und
   (iii) Tert-butylacrylat;
(b) Zugabe der organischen Mischung aus Schritt (a) zu einer wässrigen NaCl-Salzlösung mit einer Massenkonzentration an NaCl von 250-264 g/l und mit einem Polyacrylat-Copolymer wie beispielsweise dem Natrium-Salz von Thixol 53L als organischer Stabilisator,
   wobei in Schritt (b) die Massenkonzentration des N-Vinylpyrrolidon-Monomers 300 g/l bis 400 g/l beträgt, die Massenkonzentration des Tert-butylacrylats 40 g/l bis 60 g/l beträgt und die Massenkonzentration der vernetzenden Komponente 20 g/l bis 25 g/l beträgt;
(c) Initiieren einer radikalischen Suspensions-Copolymerisationsreaktion durch Zugabe von AIBN;
(d) Inkubieren der Reaktionsmischung bei einer Temperatur von zunächst 62-65 °C unter ständigem Rühren, um ein PVP-Copolymer zu bilden und die Temperatur auf 68 °C bis 70 °C erhöht wird sobald die ersten PVP-Copolymerpartikel gebildet werden; und
(e) Waschen des PVP-Copolymers;
wobei das PVP-Copolymer mindestens 72 Masse-% N-Vinylpyrrolidon-Einheiten umfasst.

### Trennmatrix zur Stabilisierung eines Getränks

Ein weiterer Aspekt der vorliegenden Erfindung betrifft eine poröse, hydrophile Trennmatrix zur Stabilisierung eines Getränks durch Bindung der darin enthaltenen trübungserzeugenden Verbindungen, wobei die Trennmatrix ein PVP-Copolymer mit mindestens 70 Masse-% N-Vinylpyrrolidon-Einheiten umfasst.

Die vorliegende Erfindung betrifft zudem eine poröse, hydrophile Trennmatrix zur Stabilisierung eines Getränks, wobei die Trennmatrix ein PVP-Copolymer umfasst, welches nach einem der obig beschriebenen Verfahren hergestellt wurde.

Eine Trennmatrix umfassend ein PVP-Copolymere mit einem hohen Anteil an N-Vinylpyrrolidon-Einheiten ermöglicht die effiziente Bindung und damit Entfernung trübungserzeugender Verbindungen aus Getränken. Zudem ist eine PVP-Copolymer-Trennmatrix, die nach einem der hierin beschriebenen Verfahren hergestellt wurde besonders kostengünstig herstellbar, da ein hoher Anteil des zur Synthese eingesetzten N-Vinylpyrrolidons in die Trennmatrix eingebaut wird. Zusätzlich weist eine nach einem der hierin beschriebenen Verfahren hergestellte Trennmatrix eine hohe Stabilität auf und kann annähernd verlustfrei regeneriert werden, beispielsweise in stark alkalischen Bedingungen mit einem pH-Wert von 10 oder höher.

Das PVP-Copolymer der porösen, hydrophilen Trennmatrix kann einen Masseanteil von N-Vinylpyrrolidon von mindestens 70 Masse-% umfassen, vorzugsweise mindestens 72 Masse-%, 74 Masse-%, 76 Masse-%, 78 Masse-%, 80 Masse-%, mindestens 85 Masse-%, mindestens 90 Masse-%, mindestens 91 Masse-%, mindestens 92 Masse-%, mindestens 93 Masse-%, mindestens 94 Masse-%, mindestens 95 Masse-%, mindestens 96 Masse-%, mindestens 97 Masse-%, mindestens 98 Masse-% oder mindestens 99 Masse-%.

In einer Ausführungsform umfasst das PVP-Copolymer der porösen, hydrophilen Trennmatrix eine wasserunlösliche, vernetzende Komponente und ein Acrylsäure- oder Methacrylsäure-haltiges Monomer umfasst, vorzugsweise wobei das Acrylsäure- oder Methacrylsäure-haltige Monomer ein Tert-butylester der Acrylsäure oder der Methacrylsäure ist, beispielsweise Tert-butylacrylat oder Tert-butylmethacrylat, und wobei die wasserunlösliche, vernetzende Komponente aus einer Liste ausgewählt ist, die Folgendes umfasst: Divinylbenzol (1,2-Divinylbenzol, 1,3-Divinylbenzol, 1,4-Divinylbenzol, oder ein Gemisch aus 1,2-Divinylbenzol und 1,4-Divinylbenzol), Ethylenglykoldimethacrylat, Ethylenglykoldiacrylat, Acryl- und Methacrylsäureester von Di-, Tri- oder Tetraalkoholen, wie beispielsweise Propylenglykole, Glycerin oder Pentaerythrit, Acryl- oder Methacrylamide von bis- oder tris-sekundären Aminen, wie beispielsweise Piperazindiacrylat, Piperazindimethacrylat oder 1,3,5-Triacryloylhexahydro-1,3,5-triazin, Methylenbisarcylamid und Methylenbismethacrylamid, vorzugsweise wobei die wasserunlösliche, vernetzende Komponente Divinylbenzol ist.

Bevorzugt ist eine Ausführungsform wobei die wasserunlösliche, vernetzende Komponente Divinylbenzol ist, welches in Kombination mit Tert-butylacrylat oder Tert-butylmethacrylat vorliegt.

In einer Ausführungsform liegt das PVP-Copolymer als poröse Partikel, poröse Membran oder poröser Monolith vor, um die Oberfläche der Trennmatrix zu vergrößern und damit die Bindungseffizienz der Trennmatrix zu erhöhen.

In einer Ausführungsform wird die Trennmatrix in einem Verfahren zur Stabilisierung von Bier verwendet. Die Trennmatrix kann beispielsweise dazu verwendet werden Polyphenole zu binden.

In einer Ausführungsform liegt die Trennmatrix in einer Säule oder einer Kassette eingebettet vor.

In einer Ausführungsform enthält die poröse, hydrophile Trennmatrix kein Polysaccharid. Bevorzugt sind Ausführungsformen in denen die Trennmatrix folgende Polysaccharide nicht enthält: Agarose, Agar, Cellulose oder Dextran. Da durch die Kopplung von PVP an ein Polysaccharid potenziell die Verfügbarkeit der funktionellen Gruppen für die Interaktion mit trübungserzeugenden Verbindungen eingeschränkt wird, kann dies zu einer Reduktion der Adsorptionskapazität führen, damit die Effizienz der Stabilisierung von Getränken reduzieren. Zudem sind Polysaccharide empfindlich gegenüber stark basischen oder stark sauren Reaktionsbedingungen bei der Regeneration und entsprechend anfällig für Hydrolyse, wodurch die Regenerierbarkeit der Trennmatrix reduziert wird. Zudem ist die Kopplung von PVP an Polysaccharide technisch aufwändig und kann zu höheren Prozesskosten führen. In einer Ausführungsform enthält die poröse, hydrophile Trennmatrix kein Kieselgur.

Am meisten bevorzugt ist eine Ausführungsform einer porösen, hydrophilen Trennmatrix die ein PVP-Copolymer umfasst, welches hergestellt wurde aus N-Vinylpyrrolidon, Divinylbenzol und Tert-butylacrylat und mindestens 72 Masse-% N-Vinylpyrrolidon umfasst.

### Verfahren zur Stabilisierung eines Getränks

Ein weiterer Aspekt der vorliegenden Erfindung betrifft ein Verfahren zur Stabilisierung eines Getränks, welches eine trübungserzeugende Verbindung enthält, umfassend die folgenden Schritte:
(a) Bereitstellen einer porösen, hydrophilen Trennmatrix gemäß einer der hierin offenbarten Ausführungsformen;
(b) Zusammenführen eines Getränks, das eine trübungserzeugende Verbindung enthält, mit der porösen, hydrophilen Trennmatrix unter Bedingungen, welche die Bindung von mindestens einem Teil der trübungserzeugenden Verbindungen an die Trennmatrix ermöglichen; und
(c) Bindung von mindestens einem Teil der trübungserzeugenden Verbindungen an die poröse, hydrophile Trennmatrix, wodurch mindestens ein Teil der trübungserzeugenden Verbindungen aus dem Getränk entzogen wird.

Die Entfernung trübungserzeugender Verbindungen kann dazu führen, die Haltbarkeit des Getränks zu erhöhen und die visuelle Erscheinung zu verbessern. Bei den trübungserzeugenden Verbindungen kann es sich um Polyphenole handeln, beispielsweise Tannine, Anthocyanogene, Catechine, und/oder Flavonoide, welche in der Lage sind Komplexe mit Proteinen zu bilden und dadurch zur Trübung des Getränks führen können.

Die PVP-Copolymerpartikel der Trennmatrix, die im hierin offenbarten Verfahren zur Stabilisierung eines Getränks verwendet wird, kann funktionelle Gruppen umfassen, die die Bildung von Wasserstoffbrückenbindungen ermöglichen und die in der Lage sind, an die trübungserzeugende Verbindung zu binden. In einer bevorzugten Ausführungsform sind die funktionellen Gruppen der PVP-Copolymerpartikel in der Lage durch Wasserstoffbrückenbindungen an ein Polyphenol oder einen aus Polyphenol und Polypeptiden gebildeten Komplex zu binden. Die stabile Bindung der PVP-Copolymere an trübungserzeugende Verbindungen ist wichtig, um die Abtrennung der trübungserzeugenden Verbindungen aus dem Getränk zu ermöglichen.

Das Verfahren kann im Rahmen eines kontinuierlichen Aufbaus oder eines chargenweisen Aufbaus durchgeführt werden. In einer bevorzugten Ausführungsform wir das Verfahren in einem kontinuierlichen Aufbau durchgeführt.

In einer Ausführungsform liegen die PVP-Copolymerpartikel in einer Säule oder einer Kassette eingebettet vor.

In einer Ausführungsform wird die poröse, hydrophile Trennmatrix und das Getränk mit einem Gewichtsverhältnis von 1:1000.000 bis 1: 100 vermengt.

In einer Ausführungsform handelt es sich bei dem Getränk um ein fermentiertes Getränk, vorzugsweise Bier.

In einer Ausführungsform liegt die Temperatur des Getränks in Schritt (b) des obig beschriebenen Verfahrens zur Stabilisierung eines Getränks über dem Gefrierpunkt des Getränks und unter 10 °C, vorzugsweise zwischen 0 °C und 5 °C. Eine niedrige Temperatur verhindert, dass sich bereits im Getränk gebildete Polyphenol-Protein Komplexe wieder lösen.

Das Verfahren zur Stabilisierung eines Getränks kann ferner umfassen Schritt (d) Regenerieren der Trennmatrix. Die Regeneration der Trennmatrix erfolgt durch Lösen der Bindungen zwischen den funktionellen Gruppen der trübungserzeugenden Verbindungen und den PVP-Copolymerpartikeln. Durch die Regeneration der Trennmatrix kann diese wiederverwendet werden, wodurch die Kosten der Stabilisierung von Getränken gesenkt werden.

In einer Ausführungsform erfolgt die Regeneration der Trennmatrix in einer wässrigen Lösung mit einem pH-Wert von 10 oder höher, vorzugsweise wobei die wässrige Lösung NaOH enthält; oder in einer Lösung mit mindestens 65% Ethanol. Die PVP-Copolymere gemäß der vorliegenden Erfindung ist annährend verlustfrei Regenerierbar unter stark alkalischen Bedingungen und führt damit zu einer optimalen Wiederverwendbarkeit der Trennmatrix und somit zu geringeren Kosten des Verfahrens zur Stabilisierung von Getränken. In einer Ausführungsform kann der Verlust an PVP-Copolymerpartikeln pro Regeneration weniger als 2% betragen, vorzugsweise weniger als 1,5%, stärker bevorzugt weniger als 1% pro Regeneration.

In einer Ausführungsform wird die Regeneration in Schritt (d) bei einer Temperatur zwischen 60 °C und 80 °C durchgeführt.

In einer weiteren Ausführungsform umfasst das Verfahren ferner Schritt (e) Wiederverwendung der regenerierten porösen, hydrophilen Trennmatrix in den Schritten (a)-(c).

Ein weiterer Aspekt der vorliegenden Erfindung umfasst die Verwendung einer Trennmatrix, welche nach einer der hierin beschriebenen Ausführungsformen hergestellt wurde, in einem Verfahren zur Stabilisierung eines Getränks gemäß einer der hierin beschriebenen Ausführungsformen.

Die nachfolgenden Beispiele dienen der Veranschaulichung der vorliegenden Erfindung und sind nicht als Beschränkung der Erfindung auf die darin offengelegten Ausführungsformen zu verstehen.

### Beispiele

### Beispiel 1: Synthese makroporöser PVP-Copolymerpartikel

Zunächst wurde eine hochkonzentrierte Salzlösung hergestellt durch Vermengen von 360 g Natriumchlorid in 1000 ml demineralisiertem Wasser bei einer Temperatur zwischen 15 °C und 25 °C. Nach etwa einem Tag wurde die Salzlösung durch Dekantieren von ungelösten Reste an sedimentierten Natriumchlorid getrennt.

Eine Lösung des Stabilisators Thixol 53L wurde hergestellt, indem zunächst 19.8 g Thixol 53L (Arkema, 30%) in 450 ml demineralisierten Wasser unter Rühren gelöst wurden. Anschließend wurde der pH-Wert der Lösung auf 8,5 eingestellt durch Zugabe einer NaOH Lösung (1 N) und demineralisiertes Wasser bis zu einem Gesamtgewicht von 600 g zugegeben.

Eine Poly(styrolsulfonat)-Lösung wurde hergestellt durch Lösen von 4,0 g Poly(natrium-4-styrolsulfonat) (M.W. 70000, CAS 25704-18-1, Merck 243051) in 96,0 g demineralisierten Wasser bei etwa 50 °C. Die Lösung wurde anschließend gefiltert und zur weiteren Verwendung dunkel und kalt gelagert, wobei optimale Ergebnisse mit frisch hergestellter Lösung erreicht wurden.

N-Vinylpyrrolidon (CAS 88-12-0, FisherScientific, Reinheit: 99,00%), stabilisiert in 0,1% NaOH, wurde vor der Verwendung destilliert.

Für die Synthese makroporöser PVP-Copolymerpartikel wurden 200 ml der Salzlösung in einen zylindrischen 700 ml-Kolben gegeben, der mit einem mechanischen Rührer, einem Gaszulauf, einem Rückflusskondensator und einem Thermometer ausgestattet war. Das Rührblatt des mechanischen Rührers war halbmondförmig mit einer Breite von etwa 50% des Kolbendurchmessers. Der mechanische Rührer war 5 bis 10 mm vom Boden des Kolbens positioniert und wurde auf 300 rpm eingestellt. Unter Rühren wurde anschließend zunächst die Thixol 53L-Lösung hinzugefügt, dann tropfenweise die Poly(styrolsulfonat)-Lösung. Anschließend wurden 120 mg Natriumbicarbonat (CAS 144-55-8) hinzugegeben und das Gefäß mit Inertgas überlagert.

Folgende Komponenten wurden in einem separaten Ansatz vermengt: 80,0 g N-Vinylpyrrolidon, 10.0 g tert-Butylacrylat (CAS 1663-39-4, TCI Europe, Reinheit: >98%), 5,0 g Divinylbenzol (CAS 1321-74-0, Merck 414565, Reinheit: ~80%), 400 mg AIBN (CAS 78-67-1, Reinheit: -96%). Dieser Monomer-Ansatz wurde zur Salzlösung hinzugegeben. 20 ml Ethylacetat (CAS 141-78-6, Reinheit: 99,00%) wurden genutzt um das Gefäß des Monomer-Ansatzes auszuspülen und ebenfalls anschließend zur Salzlösung hinzugefügt. Das Gefäß wurde erneut mit Inertgas überlagert und in einem Wasserbad auf 62-65 °C erwärmt. Nach 1-3 Stunden unter konstantem Rühren (240 rpm) wurden erste Polymerkristalle sichtbar. Anschließend wurde die Reaktion für weitere 6 Stunden bei 68-70 °C fortgeführt.

Nach der Reaktion wurden 400 ml Wasser unter Rühren hinzugegeben und nach kurzer Inkubation wurde die wässrige Phase durch Dekantieren abgetrennt, zusammen mit Teilen des Ethylacetats und nicht-reagierten Monomeren. Dieser Waschschritt wurde 3-mal wiederholt. Verbleibendes Lösungsmittel wurde anschließend abgesaugt und das Produkt anschließend mit 400 ml Ethanol gewaschen, welcher ebenfalls anschließend abgesaugt wurde. Dieser Schritt wurde 2-mal wiederholt.

Die resultierenden PVP-Copolymerpartikel wurden durch Stickstoffelementaranalyse untersucht, um den Gehalt an N-Vinylpyrrolidon zu bestimmen. Die Analyse ergab, dass die Probe 9,15% Stickstoff enthielt, was einem N-Vinylpyrrolidongehalt von 72,6% entspricht. Insgesamt wurden 86,2% des eingesetzten N-Vinylpyrrolidons umgesetzt.

## Patentansprüche

1. Verfahren zur Herstellung eines Polyvinylpyrrolidon-Copolymers, umfassend die Schritte:
(a) Vermengen von N-Vinylpyrrolidon, einer wasserunlöslichen, vernetzenden Komponente und einem Hydrolyse-stabilen Acrylsäure- oder Methacrylsäure-haltigen Monomer;
(b) Zugabe der organischen Mischung aus Schritt (a) zu einer wässrigen Salzlösung mit organischen Stabilisator;
wobei die Konzentration des Salzes ausreichend hoch ist, um die Löslichkeit der N-Vinylpyrrolidon-Monomere in der wässrigen Salzlösung zu limitieren;
(c) Initiieren einer radikalischen Suspensions-Copolymerisationsreaktion;
(d) Inkubieren der Reaktionsmischung bei einer Temperatur zwischen 40 °C und 90 °C unter ständigem Rühren, um ein Polyvinylpyrrolidon-Copolymer zu bilden; und
(e) Waschen des Polyvinylpyrrolidon-Copolymers;
wobei das Polyvinylpyrrolidon-Copolymer mindestens 70 Masse-% N-Vinylpyrrolidon-Einheiten umfasst.

2. Ein Verfahren nach Anspruch 1,
(i) wobei das Hydrolyse-stabile Acrylsäure- oder Methacrylsäure-haltige Monomer ein Tert-butylester der Acrylsäure oder der Methacrylsäure ist,
vorzugsweise wobei das Hydrolyse-stabile Acrylsäure- oder Methacrylsäure-haltige Monomer Tert-butylacrylat oder Tert-butylmethacrylat ist;
(ii) wobei die wasserunlösliche, vernetzende Komponente aus einer Liste ausgewählt ist, die Folgendes umfasst: Divinylbenzol (1,2-Divinylbenzol, 1,3-Divinylbenzol, 1,4-Divinylbenzol, oder ein Gemisch aus 1,2-Divinylbenzol und 1,4-Divinylbenzol), Ethylenglykoldimethacrylat, Ethylenglykoldiacrylat, Acryl- und Methacrylsäureester von Di-, Tri- oder Tetraalkoholen, wie beispielsweise Propylenglykole, Glycerin, oder Pentaerythrit, Acryl- oder Methacrylamide von bis- oder tris-sekundären Aminen, wie beispielsweise Piperazindiacrylat, Piperazindimethacrylat oder 1,3,5-Triacryloylhexahydro-1,3,5-triazin, Methylenbisarcylamid und Methylenbismethacrylamid,
vorzugsweise wobei die wasserunlösliche, vernetzende Komponente Divinylbenzol ist, welches in Kombination mit Tert-butylacrylat oder Tert-butylmethacrylat verwendet wird;
(iii) wobei der organische Stabilisator aus einer Kombination aus mindestens zwei polymeren, organischen Stabilisatoren besteht, vorzugsweise einer Kombination aus einem Polyacrylsäure-Copolymer und Poly(styrolsulfonat),
stärker bevorzugt wobei das Polyacrylsäure-Copolymer Thixol 53L ist oder ein Polyacrylsäure-Copolymer-Natriumsalz, hergestellt aus Thixol 53L;
(iv) wobei das Salz in Schritt (b) aus einer Liste ausgewählt ist umfassend: wasserlösliche Chloride, Sulfate, Carbonate, und Phosphate der Alkalimetalle und Erdalkalimetalle, wie Lithium, Natrium, Kalium Rubidium, Cäsium, Magnesium, Calcium, Barium und Strontium;
(v) wobei das Salz in Schritt (b) NaCl mit einer Massenkonzentration in der wässrigen Lösung zwischen 200 g/l und 264 g/l ist, vorzugsweise zwischen 250 g/l und 264 g/l ;
(vi) wobei die radikalische Polymerisationsreaktion initiert wird durch die Zugabe eines in der wässrigen Phase nicht löslichen, radikalischen Polymerisationsstarters, welcher durch thermische Anregung, Strahlung oder Redoxreaktion zur Radikalbildung angeregt wird,
vorzugsweise wobei der Radikalpolymerisationsstarter aus einer Liste ausgewählt ist, die Folgendes umfasst: Azobis(isobutyronitril) (AIBN), Dimethyl-2,2'-azobis(2-methylpropionat) (AIBME), Dibenzoylperoxid, Dicumylperoxid, Di-tert-butylperoxid, und 2,2-Dimethoxy-2-phenylacetophenon;
stärker bevorzugt, wobei der Radikalpolymerisationsstarter 0,1 Masse-% bis 1 Masse-% AIBN ist,
am meisten bevorzugt, wobei die Konzentration von AIBN zwischen 0,4 Masse-% und 0,6 Masse-% liegt;
(vii) wobei die Komponenten in Schritt (a) vermengt werden in einem organischen Lösungsmittel das aus einer Liste ausgewählt ist, die Folgendes umfasst: Ethylacetat, Propylacetat, n-Butylacetat, Isobutylacetat, tert-Butylacetat, n-Propanol, Isopropanol, oder höhere Homologe der Alkohole wie n-Hexanol, Cyclohexanol, Dodecan-1-ol, aliphatische und cycloaliphatische Kohlenwasserstoffe mit mehr als 6 Kohlenstoff-Atomen, wie n-Hexan, n-Heptan oder deren Isomere, aromatische oder arylaliphatische Verbindungen wie Toluol, o-, m-, oder p-Xylole, Ethylbenzol, Cumol und Mesitylen;
(viii) wobei die Reaktionsmischung in Schritt (d) bei einer Temperatur zwischen 55 °C und 70 °C inkubiert wird, vorzugsweise wobei die Reaktion bei einer Temperatur von 55 °C bis 65 °C eingeleitet wird und die Temperatur auf 65.5 °C bis 70 °C erhöht wird, wenn die ersten Polyvinylpyrrolidon-Copolymerpartikel gebildet werden;
(ix) wobei die Konzentration des N-Vinylpyrrolidon-Monomers in Schritt (b) zwischen 50 mmol/I und 1 mol/I liegt, vorzugsweise wobei die Konzentration des N-Vinylpyrrolidon-Monomers in Schritt (b) zwischen 200-500 mmol/l liegt;
(x) wobei die wasserunlösliche, vernetzende Komponente und das N-Vinylpyrrolidon-Monomer in einem molaren Verhältnis von 1:1 und 1:100 vorhanden sind;
(xi) wobei Schritt (e) durch Zugabe von Wasser zu dem Polyvinylpyrrolidon-Copolymer durchgeführt wird,
vorzugsweise wobei Schritt (e) mindestens 3 Mal wiederholt wird;
(xii) wobei das Verfahren ferner das Entfernen des organischen Lösungsmittels durch Absaugen oder Dekantieren vor Schritt (e) umfasst;
(xiii) wobei die Reaktionsmischung vor Schritt (d) mit einem Inertgas überlagert wird, vorzugsweise wobei die wässrige Salzlösung in Schritt (b) vor Zugabe der organischen Mischung aus Schritt (a) mit einem Inertgas überlagert wird und die Reaktionsmischung vor Schritt (d) erneut mit einem Inertgas überlagert wird;
(xiv) wobei die organischen Stabilisatoren die Monomer-Tröpfchen in der Suspension stabilisieren;
und/oder
(xv) wobei das Polyvinylpyrrolidon-Copolymer mindestens 72 Masse-% N-Vinylpyrrolidon-Einheiten umfasst, vorzugsweise wobei das Polyvinylpyrrolidon-Copolymer mindestens 75 Masse-% N-Vinylpyrrolidon-Einheiten umfasst;
und/oder
(xvii) wobei die wässrige Salzlösung in Schritt (b) einen Puffer enthält, vorzugsweise wobei Natriumbicarbonat als Puffer verwendet wird.

3. Verfahren nach Anspruch 1 oder 2, wobei das Polyvinylpyrrolidon-Copolymer poröse Partikel bildet,
(i) wobei der Durchmesser der porösen Partikel 10 µm bis 500 µm beträgt, vorzugsweise wobei der Durchmesser der porösen Partikel 100 µm bis 300 µm beträgt;
(ii) wobei die Partikelporen der porösen Partikel einen Volumenanteil von 80-99% haben; und/oder
(iii) wobei die porösen Partikel eine sphärische Form haben.

4. Poröse, hydrophile Trennmatrix zur Stabilisierung eines Getränks, umfassend ein Polyvinylpyrrolidon-Copolymer,
wobei das Polyvinylpyrrolidon-Copolymer mindestens 70 Masse-% N-Vinylpyrrolidon-Einheiten umfasst.

5. Poröse, hydrophile Trennmatrix zur Stabilisierung eines Getränks, umfassend ein Polyvinylpyrrolidon-Copolymer, hergestellt nach einem Verfahren gemäß den Ansprüchen 1 bis 3.

6. Eine poröse, hydrophile Trennmatrix nach Anspruch 4 oder 5,
(i) wobei das Polyvinylpyrrolidon-Copolymer eine wasserunlösliche, vernetzende Komponente und ein Acrylsäure- oder Methacrylsäure-haltiges Monomer umfasst,
vorzugsweise wobei das Acrylsäure- oder Methacrylsäure-haltige Monomer ein Tert-butylester der Acrylsäure oder der Methacrylsäure ist, beispielsweise Tert-butylacrylat oder Tert-butylmethacrylat,
und wobei die wasserunlösliche, vernetzende Komponente aus einer Liste ausgewählt ist, die Folgendes umfasst: Divinylbenzol (1,2-Divinylbenzol, 1,3-Divinylbenzol, 1,4-Divinylbenzol, oder ein Gemisch aus 1,2-Divinylbenzol und 1,4-Divinylbenzol), Ethylenglykoldimethacrylat, Ethylenglykoldiacrylat, Acryl- und Methacrylsäureester von Di-, Tri- oder Tetraalkoholen, wie beispielsweise Propylenglykole, Glycerin oder Pentaerythrit, Acryl- oder Methacrylamide von bis- oder tris-sekundären Aminen, wie beispielsweise Piperazindiacrylat, Piperazindimethacrylat oder 1,3,5-Triacryloylhexahydro-1,3,5-triazin, Methylenbisarcylamid und Methylenbismethacrylamid,
vorzugsweise wobei die wasserunlösliche, vernetzende Komponente Divinylbenzol ist;
stärker bevorzugt wobei die wasserunlösliche, vernetzende Komponente Divinylbenzol ist, welches in Kombination mit Tert-butylacrylat oder Tert-butylmethacrylat vorliegt;
(ii) wobei das Polyvinylpyrrolidon-Copolymer als poröse Partikel, poröse Membran oder poröser Monolith vorliegt;
(iii) wobei die Trennmatrix in einem Verfahren zur Stabilisierung von Bier verwendet wird;
(iv) wobei die Trennmatrix in der Lage ist, Polyphenole zu binden;
(v) wobei die Trennmatrix in einer Säule oder einer Kassette eingebettet vorliegt;
(vi) wobei die poröse, hydrophile Trennmatrix kein Polysaccharid enthält,
vorzugsweise wobei die poröse, hydrophile Trennmatrix nicht enthält Agarose, Agar, Cellulose oder Dextran;
(vii) wobei die poröse, hydrophile Trennmatrix kein Kieselgur enthält;
und/oder
(viii) wobei das Polyvinylpyrrolidon-Copolymer mindestens 72 Masse-% N-Vinylpyrrolidon-Einheiten umfasst, vorzugsweise wobei das Polyvinylpyrrolidon-Copolymer mindestens 75 Masse-% N-Vinylpyrrolidon-Einheiten umfasst.

7. Verfahren zur Stabilisierung eines Getränks, das eine trübungserzeugende Verbindung enthält, umfassend die folgenden Schritte:
(a) Bereitstellen einer porösen, hydrophilen Trennmatrix nach einem der Ansprüche 4 bis 6;
(b) Zusammenführen eines Getränks, das eine trübungserzeugende Verbindung enthält, mit der porösen, hydrophilen Trennmatrix unter Bedingungen, welche die Bindung von mindestens einem Teil der trübungserzeugenden Verbindungen an die Trennmatrix ermöglichen; und
(c) Bindung von mindestens einem Teil der trübungserzeugenden Verbindungen an die poröse, hydrophile Trennmatrix, wodurch mindestens ein Teil der trübungserzeugenden Verbindungen aus dem Getränk entzogen wird.

8. Ein Verfahren nach Anspruch 7,
(i) wobei die trübungserzeugende Verbindung ein Polyphenol ist;
(ii) wobei die Polyvinylpyrrolidon-Copolymerpartikel funktionelle Gruppen umfassen, die die Bildung von Wasserstoffbrückenbindungen ermöglichen und die in der Lage sind, an die trübungserzeugende Verbindung zu binden,
vorzugsweise wobei die funktionellen Gruppen in der Lage sind durch Wasserstoffbrückenbindungen an ein Polyphenol oder einen aus Polyphenol und Polypeptiden gebildeten Komplex zu binden;
(iii) wobei das Verfahren in einem kontinuierlichen Aufbau oder in einem chargenweisen Aufbau durchgeführt wird,
vorzugsweise wobei das Verfahren in einem kontinuierlichen Aufbau durchgeführt wird;
(iv) wobei die Polyvinylpyrrolidon-Copolymerpartikel in einer Säule oder einer Kassette immobilisiert vorliegen;
(v) wobei in Schritt (b) die poröse, hydrophile Trennmatrix und das Getränk in einem Gewichtsverhältnis von 1:1000.000 bis 1:100 kombiniert werden;
(vi) wobei es sich bei dem Getränk um ein fermentiertes Getränk handelt, vorzugsweise wobei das fermentierte Getränk Bier ist;
und/oder
(vii) wobei die Temperatur des Getränks in Schritt (b) über dem Gefrierpunkt des Getränks und unter 10 °C liegt, vorzugsweise wobei die Temperatur des Getränks in Schritt (b) zwischen 0 °C und 5 °C liegt.

9. Ein Verfahren nach Anspruch 7 oder 8, ferner umfassend Schritt (d) Regenerieren der Trennmatrix,
(i) wobei die Regeneration der Trennmatrix erfolgt in einer wässrigen Lösung mit einem pH-Wert von 10 oder höher, vorzugsweise wobei die wässrige Lösung NaOH enthält; oder in einer Lösung mit mindestens 65% Ethanol;
(ii) wobei die Regeneration in Schritt (d) bei einer Temperatur zwischen 60 °C und 80 °C durchgeführt wird;
(iii) wobei der Verlust an Polyvinylpyrrolidon-Copolymerpartikeln weniger als 2 % pro Regeneration beträgt;
und/oder
(iv) ferner umfassend Schritt (e) Wiederverwendung der regenerierten porösen, hydrophilen Trennmatrix in den Schritten (a)-(c).

10. Verwendung einer Trennmatrix nach einem der Ansprüche 4 bis 6 in einem Verfahren nach einem der Ansprüche 7 bis 9.
